# EUROPEAN PATENT APPLICATION

(11) **EP 3 269 559 A1**
(43) Date of publication of application: **17.01.2018**
(21) Application number: 16179209.8
(22) Date of filing: 13.07.2016
(51) Int. Cl.: B44C 1/10, C09D 129/04

(54) **COVERING FOR AN ITEM AND COMPOSITION THEREOF**

(71) Applicant: Unique Trading Company, Causeway Bay, Hong Kong (HK)
(72) Inventor: CHI FAI, Wallace, Hong Kong (HK)
(74) Representative: Carlos Hernando, Borja

(57) **Abstract**

A method for covering an item to decorate the item is provided. The method includes providing a covering and wrapping the covering on a surface of the item to decorate the item. The covering composition is also provided. The covering composition includes at least glycerol, polyvinyl alcohol, polyethylene oxide, carboxymethyl cellulose sodium, polyoxymethylene sorbitan monolaurate, sodium dihydrogen phosphate dehydrate, boric acid, 2-phenodyethanol, polyhexamethylene biguanidine hydrochloride, chloroxylenol, and methyl Paraben.

## Description

The present disclosure generally relates to covering, more specifically, the present disclosure relates to covering for an item and composition thereof.

### BACKGROUND

Laminates may be employed for wall panels, room dividers and, in smaller applications, as bases for desk pens, cigarette lighters, etc. Generally, laminated plastic panels have been used in conjunction with decorative objects which are impressed between layers of the plastic panel.

Typically, the plastics used are translucent or transparent so that the decorative objects can be visible in the face of the panel. Butterflies and plant forms exemplify the type of decorative material usually compressed between the panel layers to enhance the beauty of the panel of translucent or transparent material has fracture interfaces induced in it by the application of force to localized areas of one of its faces. A layer of pigmented adhesive is pressed between the fracture face of the first panel layer and a mating face of a second panel layer, the second panel layer being substantially similar in shape and area to the first... The two panel layers are then separated a slight amount to permit the partially set adhesive layer to coalesce in a random pattern. Then the two layers are pressed together and the adhesive is allowed to set.

### SUMMARY

It will be understood that this disclosure in not limited to the particular systems, and methodologies described, as there can be multiple possible embodiments of the present disclosure which are not expressly illustrated in the present subject matter. It is also to be understood that the terminology used in the description is for the purpose of describing the particular versions or embodiments of the present subject matter only, and is not intended to limit the scope of the present subject matter.

In an embodiment of the present subject matter, a method for covering an item is provided. The method includes providing a covering and wrapping the covering on a surface of the item such that a gluable surface of the covering touches the surface of the item.

In another embodiment, a covering composition is provided. The covering composition includes at least water, glycerol, polyvinyl alcohol, polyethylene oxide, carboxymethyl cellulose sodium, polyoxymethylene sorbitan monolaurate, sodium dihydrogen phosphate dehydrate, boric acid, 2-phenodyethanol, polyhexamethylene biguanidine hydrochloride, chloroxylenol, and methyl Paraben.

The foregoing has outlined rather broadly the features and technical advantages of the present disclosure in order that the detailed description of the disclosure that follows may be better understood. Additional features and advantages of the disclosure will be described hereinafter which form the subject of the claims of the disclosure. It should be appreciated that the conception and specific embodiment disclosed may be readily utilized as a basis for modifying or designing other structures for carrying out the same purposes of the present disclosure. It should also be realized that such equivalent constructions do not depart from the disclosure as set forth in the appended claims. The novel features which are believed to be characteristic of the disclosure, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

For a more complete understanding of the present disclosure, reference is now made to the following descriptions taken in conjunction with the accompanying drawing, in which:
Figure 1 illustrates a covering for an item, according to an embodiment.
Figure 2 illustrates a method for covering an item, according to an embodiment.
Figure 3 illustrates a pen stand decorated by the covering as that shown in FIG. 1, in accordance with an embodiment.
Figure 4 illustrates a photo frame decorated by the covering as that shown in FIG. 1, in accordance with an embodiment.

### DETAILED DESCRIPTION

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred, systems and methods are now described.

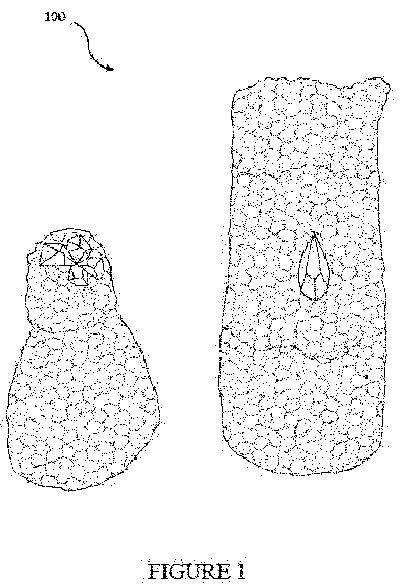

Figure 1 illustrates a covering 100 also referred to as a bead, according to an embodiment. According to the present embodiment, the covering 100 is a flexible sheet, however, the covering 100 is not limited only to the flexible sheet and may be of any shape such as wire, cylinder, etc. In an example, the covering 100 may be made of water, glycerol, polyvinyl alcohol, polyethylene oxide, carboxymethyl cellulose sodium, polyoxymethylene sorbitan monolaurate, sodium dihydrogen phosphate dehydrate, boric acid, 2-phenodyethanol, polyhexamethylene biguanidine hydrochloride, chloroxylenol, and/or methyl Paraben. In accordance with an embodiment, the covering 100 is composed of the more than 49.5% by volume of water, less than 20% by volume of glycerol, less than 20% by volume of polyvinyl alcohol, less than 3% by volume of polyethylene oxide, less than 2.5% by volume of the carboxymethyl cellulose sodiumis, less than 1.5% by volume of the polyoxymethylene sorbitan monolaurate, less than 0.9% by volume of the sodium dihydrogen phosphate dehydrate, less than 0.9% by volume of the boric acid, less than 0.8% by volume of the 2-phenodyethanol, less than 0.3% by volume of the Polyhexamethylene biguanidine hydrochloride, less than 0.3% by volume of the Chloroxylenol, and less than 0.3% by volume of the methyl Paraben.

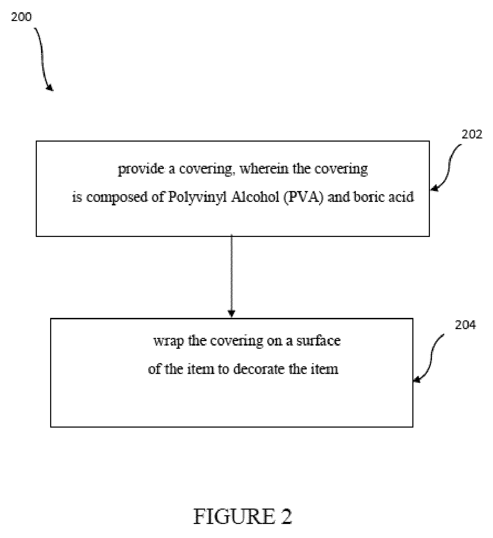

Referring now to Figure 2 which illustrates a method 200 for covering an item. The item may be any object in the real world, such as pen stand, photo frame, poster or cards, vase, light bulb cover, plastic bottle, and the like. At step 202, a covering 100 is provided. The covering 100 may be composed of polyvinyl alcohol (PVA) and boric acid. In one embodiment, the covering is in a paste form. The covering 100 may be sticky to an object when wrapped around the object and thus the covering 100 takes a contour of the object. In an example, the covering 100 may be made of water, glycerol, polyvinyl alcohol, polyethylene oxide, carboxymethyl cellulose sodium, polyoxymethylene sorbitan monolaurate, sodium dihydrogen phosphate dehydrate, boric acid, 2-phenodyethanol, polyhexamethylene biguanidine hydrochloride, chloroxylenol, and methyl Paraben. In one example, any other neutral solvent may be provided in place of water.

A liquid may be applied on a surface of the covering 100 for converting the surface into a gluable surface. The liquid, for example, may be water. However, any other liquid may also be applied.

At step 204, the covering 100 is wrapped on a surface of the item. The covering 100 is wrapped such that the gluable surface of the covering 100 touches the surface of the item.

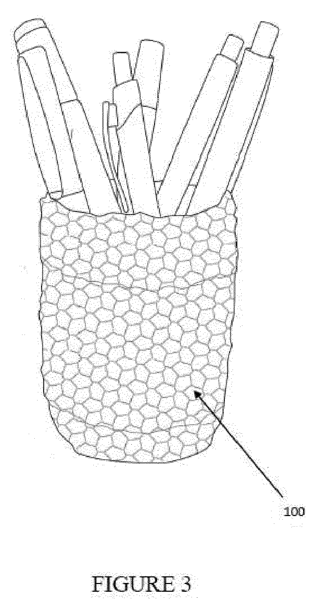

Figure 3 illustrates a pen stand decorated with the covering 100 in accordance with an example of the present subject matter. For decorating the pen stand, a liquid is applied on a surface of the covering 100. Application of the liquid on the surface of the covering 100 converts the surface of the covering 100 into a gluable surface. The gluable surface may have a property of sticking on any surface as that of glue is applied on the surface. The liquid may be water or any other aqueous liquid. Subsequently, the covering 100 is wrapped on a surface of the pen stand. The covering 100 is wrapped such that the gluable surface of the covering 100 touches the surface of the pen stand. Alternatively, the covering 100 may be directly used for wrapping on the surface of an item. On wrapping, the covering 100 sticks to the surface of the pen stand. Further, glitter, sequins, gems and/or any other such decorating items may be applied to the surface of the covering 100 for providing a pleasant aesthetic view when the covering 100 is glued or directly applied on the surface of the item. In accordance with an example, the covering 100 may be of different colors by adding colors to the composition of the covering 100. After the covering 100 is wrapped on the surface of the pen stand, the pen stand with the covering 100 is kept for a predefined time, for example for 24 hours for providing a strong binding between the covering 100 and the surface of the pen stand.

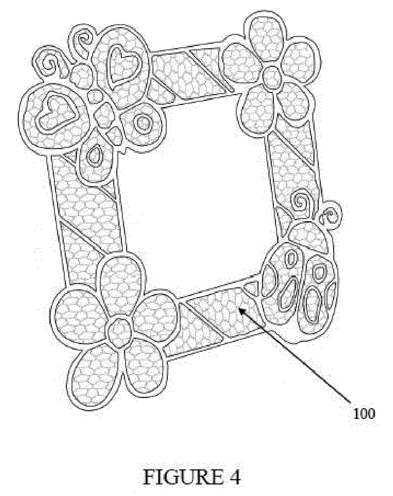

Figure 4 illustrates a photo frame decorated with the covering 100 in accordance with an example of the present subject matter. The covering 100 is applied with a liquid on its surface and is pasted on borders of the photo frame for decorating it.

The above examples are explained with reference to the photo frame and the pen. However, the covering 100 may be used to decorate or cover any real time items including but not limited to poster or cards, vase, light bulb cover, plastic bottle, toys, and the like.

It will finally be understood that the disclosed embodiments are presently preferred examples of how to make and use the claimed disclosure, and are intended to be explanatory rather than limiting of the scope of the disclosure as defined by the claims below. Reasonable variations and modifications of the illustrated examples in the foregoing written specification and drawings are possible without departing from the scope of the disclosure as defined in the claim below. It should further be understood that to the extent the term "disclosure" is used in the written specification, it is not to be construed as a limited term as to number of claimed or disclosed disclosures or the scope of any such disclosure, but as a term which has long been conveniently and widely used to describe new and useful improvements in technology The scope of the disclosure supported by the above disclosure should accordingly be construed within the scope of what it teaches and suggests to those skilled in the art, and within the scope of any claims that the above disclosure supports. The scope of the disclosure is accordingly defined by the following claims.

## Claims

1. A method for covering an item to decorate the item, **characterized in that** it comprises:
providing a covering, wherein the covering is composed of Polyvinyl Alcohol (PVA) and boric acid;
wrapping the covering on a surface of the item to decorate the item.

2. Method, according to claim 1, **characterized in that** a surface of the covering touches the surface of the item.

3. Method, ccording to claim 2, **characterized in that** the surface of the covering that touches the surface of the item is a gluable surface.

4. Method, according to claim 3, **characterized in that** the gluable surface of the covering is made by applying a liquid on a surface of the covering.

5. Method, according to claim 4, **characterized in that** the liquid is water.

6. Method, according to claim 5, **characterized in that** the water is applied to cover the complete surface of the covering.

7. Method, according to claim 1, **characterized in that** the covering is further composed of water.

8. Method, according to claim 7, **characterized in that** the water is at least 49.5% by volume,

9. Method, according to claim 7, **characterized in that** the covering is further composed of at least glycerol, polyethylene oxide, carboxymethyl cellulose sodium, polyoxymethylene sorbitan monolaurate, sodium dihydrogen phosphate dehydrate, 2-phenodyethanol, polyhexamethylene biguanidine hydrochloride, chloroxylenol, and methyl Paraben.

10. Method, , according to claim 9, **characterized in that** the glycerol is less than 20% by volume, polyvinyl alcohol is less than 20% by volume, the polyethylene oxide is less than 3% by volume; the carboxymethyl cellulose sodium is less than 2.5% by volume, the polyoxymethylene sorbitan monolaurate is less than 1.5% by volume, the sodium dihydrogen phosphate dehydrate is less than at least 0.9%, the boric acid is less than at least 0.9% by volume, the 2-phenodyethanol is less than 0.8% by volume, the Polyhexamethylene biguanidine hydrochloride is less than 0.3% by volume, the Chloroxylenol is less than 0.3% by volume, and the methyl Paraben is less than 0.3% by volume.

11. A covering composition **characterized in that** it comprises:
at least glycerol, polyvinyl alcohol, polyethylene oxide, carboxymethyl cellulose sodium, polyoxymethylene sorbitan monolaurate, sodium dihydrogen phosphate dehydrate, boric acid, 2-phenodyethanol, polyhexamethylene biguanidine hydrochloride, chloroxylenol, and methyl Paraben.

12. Covering composition, according to claim 11, **characterized in that** it further comprising a neutral solvent.

13. Covering composition, according to claim 12, **characterized in that** the neutral solvent is water.

14. Covering composition, according to claim 13, **characterized in that** the water is at least 49.5% by volume,

15. Covering composition, according to claim 11, **characterized in that** the glycerol is less than 20% by volume, polyvinyl alcohol is less than 20% by volume, the polyethylene oxide is less than 3% by volume; the carboxymethyl cellulose sodium is less than 2.5% by volume, the polyoxymethylene sorbitan monolaurate is less than 1.5% by volume, the sodium dihydrogen phosphate dehydrate is less than at least 0.9%, the boric acid is less than at least 0.9% by volume, the 2-phenodyethanol is less than 0.8% by volume , the Polyhexamethylene biguanidine hydrochloride is less than 0.3% by volume, the Chloroxylenol is less than 0.3% by volume, and the methyl Paraben is less than 0.3% by volume.
